# EUROPÄISCHE PATENTANMELDUNG

(11) **EP 0 602 270 A1**
(43) Veröffentlichungstag der Anmeldung: **22.06.1994**
(21) Anmeldenummer: 92121443.3
(22) Anmeldetag: 17.12.1992
(51) Int. Cl.: B60R 1/08, B60R 1/12, B60Q 1/44

(54) **Seitenblickspiegel für Kraftfahrzeuge und dergleichen**

(71) Anmelder: Thöne, Hermann, D-67035 Ludwigshafen (DE)
(72) Erfinder: Thöne, Hermann, D-67035 Ludwigshafen (DE)

(57) **Zusammenfassung**

Ein Seitenblickspiegel für Kraftfahrzeuge und dergleichen besteht aus einem Winkelspiegel, womit außer der Ausschaltung des toten Winkels auch beim Rückwärtsfahren frühzeitig zu übersehen ist, ob eine senkrechte Fahrbahn frei ist.
Der Seitenblickspiegel besteht aus 2 konvexen Spiegeln (2), welche winkelförmig an einer Halterung (1) angebracht sind. Diese Einrichtung wird an der Heckscheibe eines Fahrzeugs mittels einer Klebefläche (6) angebracht, und der Fahrer des Fahrzeugs kann den Spiegel direkt oder auch über den vorderen Innenspiegel beobachten. Innerhalb der Klebefläche (6) der Halterung (1) kann ein Stoplicht (12) angebracht werden.

## Beschreibung

Aufgabe der Erfindung ist, dem Fahrer eines Kraftfahrzeugs die Möglichkeit zu geben, den sogenannten "toten Winkel" ausschalten zu können, der bei Überholmanövern häufig eintritt und die Gefahr eines Zusammenstoßes sehr groß ist. Bei den üblichen Rückblickspiegeln ist zeitweilig das überholende Fahrzeug nicht sichtbar. Hierdurch sind schon zahlreiche Unfälle - oft mit Todesfolge - passiert.

Ferner dient diese Erfindung auch zum besseren Überblick beim Rückwärtsfahren an einer Straßenkreuzung oder aus einer Garage oder Ausfahrt usw. Man kann durch diese Einrichtung frühzeitig übersehen, ob hinten links oder rechts frei ist, ohne, wie sonst üblich, zu weit herausfahren zu müssen, um sich einen Überblick zu beschaffen. Der Seitenblickspiegel verhindert die bisherige Gefährdung, beim Rückwärtsfahren oder bei Überholmanövern, mit einem anderen Fahrzeug zu kollidieren oder auch Fußgänger zu verletzen.

Zum Stand der Technik gehört D - G 8900243.1 (Thöne). Hier sind Spiegelschenkel so ausgebildet, daß ein Justieren nach allen Seiten nicht möglich ist, weil die Spiegel mit einem Scharnier verbunden sind und so kaum gut einzujustieren sind. Hier fällt es schwer, die Spiegel auf den Fahrer einzustellen, weil dann der Spiegel an der Heckscheibe so weit unten angebracht werden müßte, daß er von Personen, die im Fond des Autos sitzen, verdeckt würde.

Anders ist es bei dem vorliegenden Seitenblickspiegel, wo jeder Spiegel für sich nach allen Seiten dreh- - schwenk- und neigbar ist.

Der Seitenblickspiegel besteht aus einem Spiegelpaar ( 2 ), wobei die Spiegel ( 3 ) eine kleine konvexe Krümmung,KR ca. 1400 mm, aufweisen, um einen großen Sichtwinkel zu erfassen. Die beiden Spiegelpaar werden von der Halterung ( 1 ) getragen und werden durch Kugelschalen ( 4 ) in den Spiegelgehäusen und Kugeln an den Halterungen ( 1 ) zusammengesteckt.

Der Seitenblickspiegel wird innerhalb der Heckscheibe im Fahrzeug angebracht und zwar so, daß die Spiegelpaare einen Winkel bilden und die Spitze des Winkels auf den Fahrer zeigt. Der Fahrer des Fahrzeugs kann entweder über seinen vorderen Innenspiegel die beiden Spiegelpaare beobachten, die wiederum die Sicht nach links und rechts freigeben, oder auch direkt, das heißt beim Rückwärtsfahren nach hinten schauen und über die beiden Spiegelpaare die Sicht nach links und rechts erkennen.

Durch die Kugelhalterung ist es möglich, die Spiegelpaare so zu justieren, daß der Fahrer die Sicht nach links und rechts erhält. Die stumpfe Seite des Spiegelhalters hat eine Fläche ( 6 ), welche mit einer Spezialklebefolie versehen den Spiegel an der Heckscheibe befestigt.

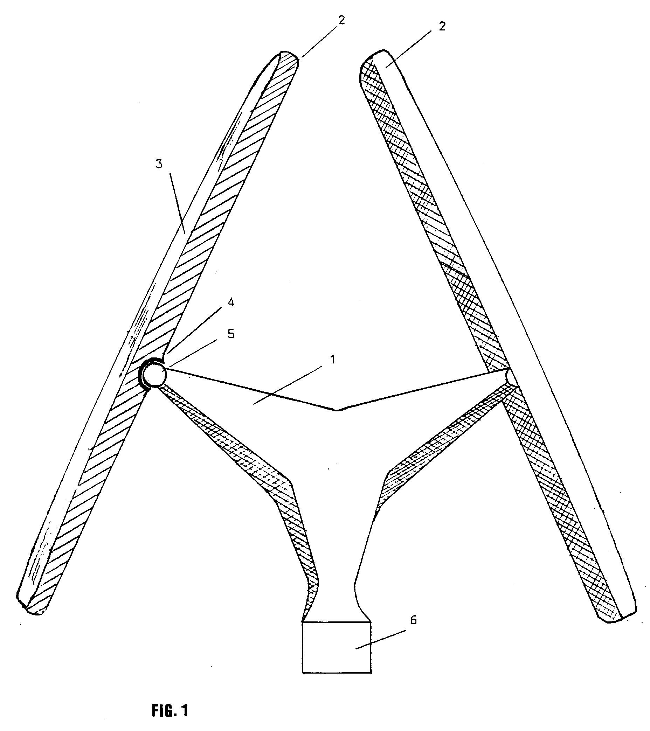

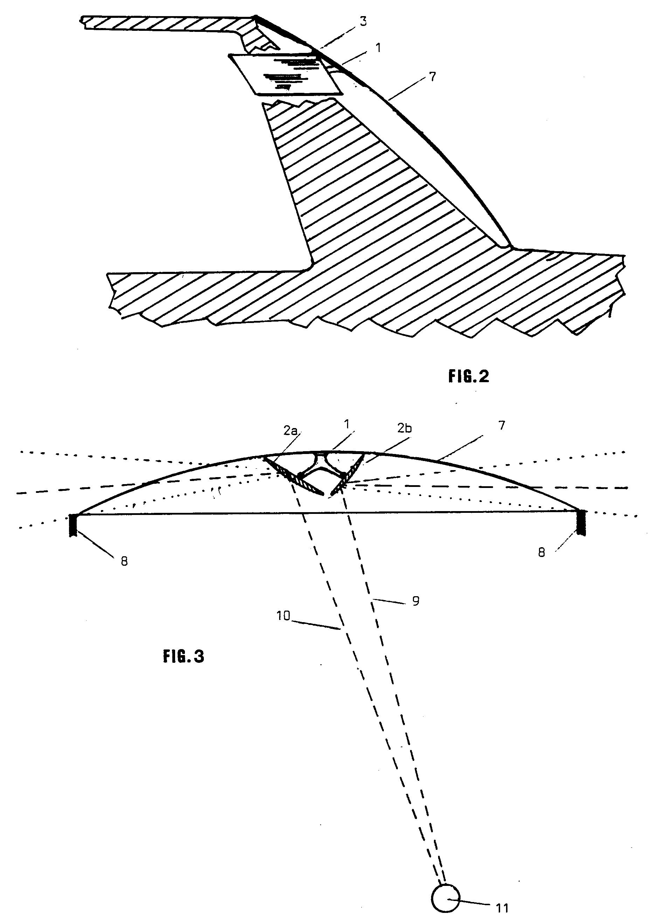

Figur 3 verdeutlicht die Funktion der Spiegelpaare ( 2a und 2b ), welche an der Heckscheibe ( 7 ) haften. Vom Fahrer ( 11 ) geht die Sicht über beide Spiegel einmal nach rechts ( 9 ) und einmal nach links ( 10 ). Durch die Schrägstellung und der konvexen Oberfläche der Spiegel ( Figur 2 und 3 ) ist die Karosserie des Autos ( 8 ) nicht störend. Es wird eine klare Sicht nach links und rechts wiedergegeben.

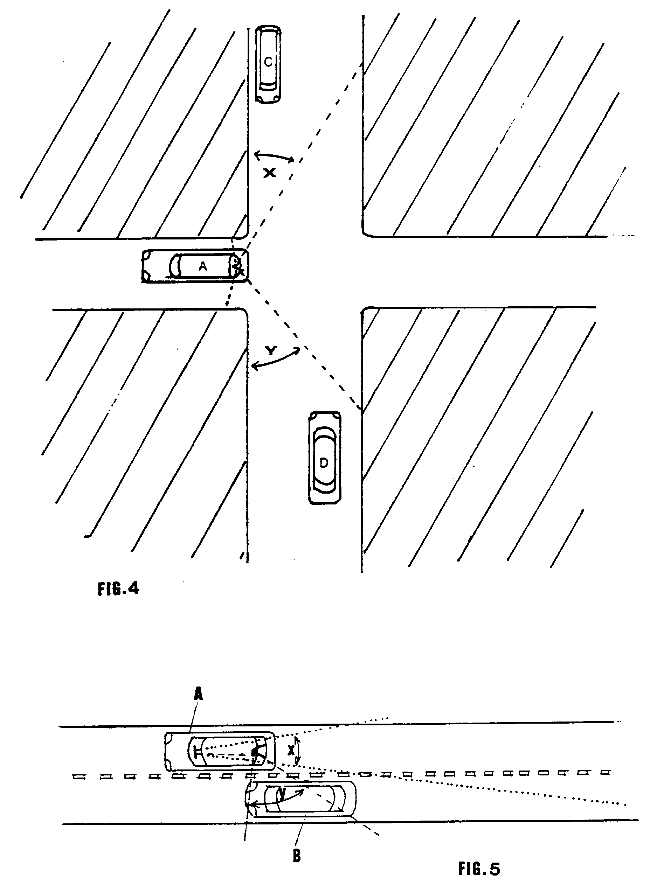

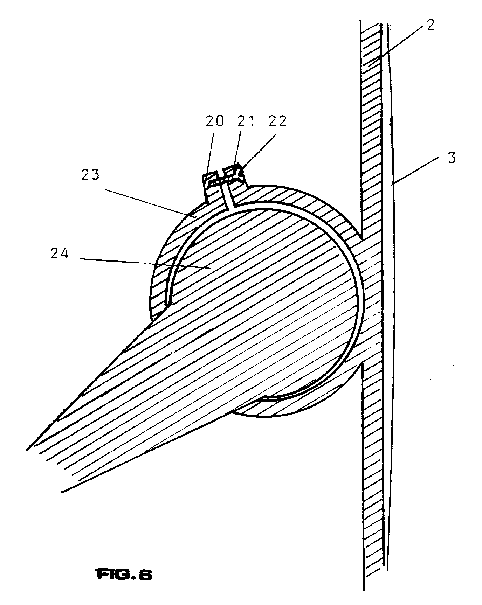

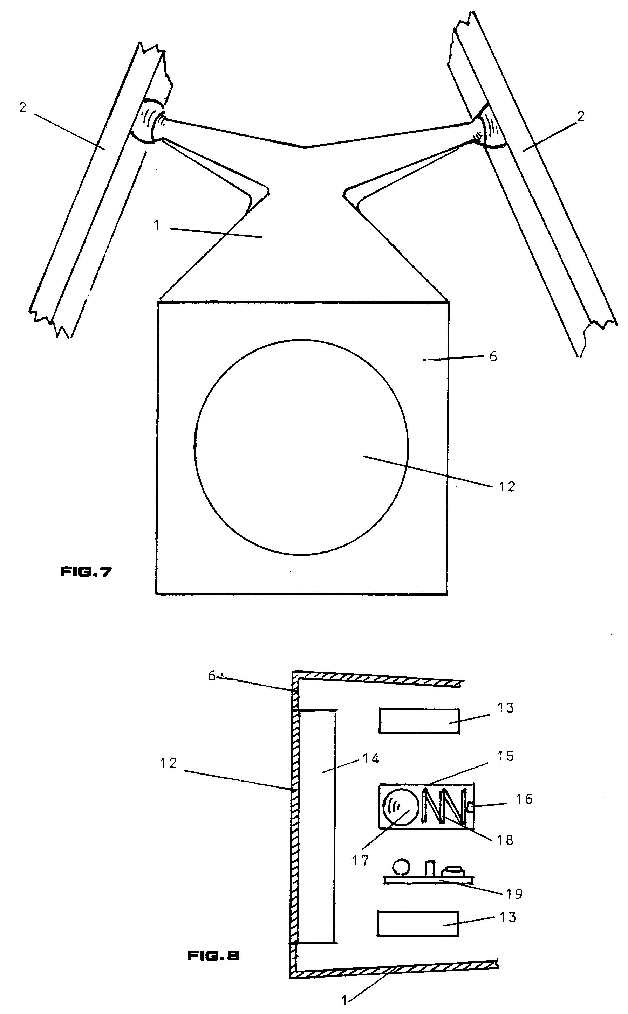

Figur 4 zeigt den rückwätrs fahrenden Wagen A. Er bleibt am Anfang der Straßenkreuzung stehen. In den Sichtwinkeln x und y sind die Wagen C und D zu erkennen, ohne daß der Wagen weiter zurück fahren muß.

Figur 5 zeigt ein Beispiel auf einer Autostraße. Hier kann der Fahrer des Wagens A über seinen Innenspiegel einmal nach hinten schauen ( x ) und erkennt aber auch über den rechten Spiegel des Spiegelpaares im Winkel ( y ) den herannahenden Wagen ( B ), der sich üblicherweise im toten Winkel befinden würde.

Um auch die einmal einjustierten Spiegel in deren Stellung zu halten, kann statt der eingelassenen Kugelschalen innerhalb der Spiegelgehäuse ( 2 ) eine Kugelschale ( 23 ) an das Spiegelgehäuse ( 2 ) fest verbunden werden. Das hat den Vorteil, daß die Kugel von der Halterung ( 24 ) durch eine Festziehschraube ( 22 ) über die beiden Haltestege ( 20 und 21 ) angezogen werden kann und somit die Spiegel fest an der Halterung sitzen ohne zu verrutschen.

Innerhalb der Klebefläche ( 6 ) der Halterung ( 1 ) kann ein kreisrundes oder eckiges Stoplicht ( 12 ) angebracht werden. Dies hat den Zweck, daß bei einer starken Notbremsung das Stoplicht aufleuchtet und so dem nachfolgendem Fahrer aufdringlich Aufmerksamkeit zuteil wird, damit dieser sein Fahrzeug auch zügig bremst.

Im Gehäuse ( 1 ) der Klebehalterung ( 6 ) wird eine Lampe ( 14 ) integriert. Ein Rohr ( 15 ) mit einer Druckfeder ( 18 ) und einer Stahlkugel ( 17 ) reagiert beim plötzlichen Stop so, daß die Kugel nach hinten drückt und an dem Kontaktpunkt ( 16 ) den Strom aus den Batterien ( 13 ) auf die Lampe bringt. Dies geschieht über eine elektronische Zeitschaltung ( 19 ), weil die Kugel von der Feder sofort wieder zurückgedrängt wird. Die Zeitschaltung läßt sich so einstellen, daß das Stoplicht mindestens 3 Sekunden brennt.

Der Seitenblickspiegel kann an jede Heckscheibe eines Autos angebracht werden, auch wenn diese keine Wölbung aufweist. In diesem Fall verringert sich lediglich der Sichtwinkel.

## Patentansprüche

1. Seitenblickspiegel für Kraftfahrzeuge und dergleichen, gekennzeichnet durch zwei konvex ausgebildete Spiegel ( 3 ) in Gehäusen ( 2 ), welche beweglich an einer dreischenkligen Halterung ( 1 ) angeordnet sind und an den Enden der sich gegenüberliegenden Schenkel ist jeweils eine Kugel ausgebildet.

2. Seitenblickspiegel nach Anspruch 1, mit an den Spiegelgehäusen eingebauten Kugelschalen ( 4 ) mit seitlicher Öffnung , worin die Kugeln an den Enden der Halterung ( 1 ) aufgenommen werden können.

3. Seitenblickspiegel nach Anspruch 1, mit an den Spiegelgehäusen angebauten Kugelschalen ( 23 ), wobei jeweils an der Seite der Kugelschalen ein Einschnitt angebracht ist. An den Einschnitten befinden sich die Stege ( 20 u. 21 ) mit einer durchgehenden Feststellschraube ( 22 ). Dies dient dem Zweck, um nach Einjustierung der Spiegel die Kugeln an den Enden der Halterung ( 1 ), welche von den Kugelschalen aufgenommen werden, festzustellen.

4. Seitenblickspiegel nach Anspruch 1, gekennzeichnet durch eine Haltefläche ( 6 ) am stumpfen Ende der Halterung ( 1 ), worauf eine Klebefolie zum Anbringen des Seitenblickspiegels am Heckfenster eines Fahrzeugs angebracht ist.

5. Seitenblickspiegel nach Anspruch 1, 2, 3 und 4, gekennzeichnet durch innerhalb der Haltefläche am stumpfen Ende der Halterung ( 1 ) integriertes Stopplicht ( 12 ) und innerhalb der Fläche ( 6 ) eingebautem Rohr ( 15 ) mit einer innerhalb des Rohres befindlichen Stahlkugel ( 17 ) mit der Druckfeder ( 18 ) und einem Kontaktschalter ( 16 ). Ferner einem elektronischen Verzögerungsschalter ( 19 ) und den Batterien ( 13 ).
